# EUROPÄISCHE PATENTSCHRIFT

(11) **EP 3 746 260 B1**
(45) Veröffentlichungstag und Bekanntmachung des Hinweises auf die Patenterteilung: **10.11.2021**
(21) Anmeldenummer: 19706368.8
(22) Anmeldetag: 31.01.2019
(51) Int. Cl.: B23K 37/04, B23K 26/38, B23K 26/70

(54) **WERKSTÜCKAUFLAGE FÜR EINE WERKZEUGMASCHINE UND WERKZEUGMASCHINE**
WORKPIECE SUPPORT FOR A MACHINE TOOL, AND MACHINE TOOL
SUPPORT DE PIÈCE À USINER POUR UNE MACHINE-OUTIL ET MACHINE-OUTIL

(30) Priorität: 31.01.2018 DE 102018000787
(43) Veröffentlichungstag der Anmeldung: 09.12.2020
(73) Patentinhaber: Bystronic Laser AG, 3362 Niederönz (CH)
(72) Erfinder: LANZ, Ueli, 3375 Inkwil (CH); KÄHR, Christian, 5034 Suhr (CH)
(74) Vertreter: Fink Numrich Patentanwälte PartmbB
(86) Internationale Anmeldenummer: PCT/EP2019/000033
(87) Internationale Veröffentlichungsnummer: WO 2019/149443

(56) Entgegenhaltungen:
- EP-A1- 0 213 235
- EP-A1- 1 393 847
- EP-A2- 2 471 625
- EP-B1- 1 393 847
- US-A1- 2005 116 396

## Beschreibung

Die Erfindung betrifft eine Werkstückauflage für eine Werkzeugmaschine und eine Werkzeugmaschine, insbesondere eine Werkstückauflage für eine Werkzeugmaschine nach Anspruch 1 und eine Werkzeugmaschine nach Anspruch 9. Insbesondere betrifft die Erfindung die Verringerung von Torsionskräften für eine Werkstückauflage wie zum Beispiel einen Schneidtisch. Der Oberbegriff des Anspruchs 1 basiert auf der EP 0 213 235 A1.

Eine Werkzeugmaschine dient zur Herstellung und Bearbeitung von Werkstücken unter Verwendung von Werkzeugen. Als Werkzeugmaschinen werden hier beispielsweise Schneidmaschinen, insbesondere Strahlschneidmaschinen mit einem Laserstrahl, Wasserstrahl oder Plasmastrahl angesehen.

Werkstückauflagen wie zum Beispiel Schneidtische sind oft auf Rollen gelagert, die unten bzw. mit einer Unterseite und relativ weit außen an Längsträgern des Schneidtisches angeordnet sind. Schneidrostelemente zur Lagerung des Werkstücks sind zwischen den Längsträgern an Auflageleisten an einem inneren Bereich der Längsträger befestigt.

Da die Krafteinleitung der Auflageleisten und die der Laufrollen versetzt zueinander sind, ergibt sich ein Drehmoment auf dem Längsträger, was zu einer unerwünschten Torsion oder Verdrehung der Längsträger führt.

EP 2 626 165 A1 offenbart zum Beispiel in Figur 2 einen Schneidtisch mit konventioneller Aufhängung der Rost-Schienen, bei der die Seitenträger des Schneidtisches unter Last nach aussen wegbiegen können.

WO 2009/024 166 A1 und DE 10 2009 013 216 133 offenbaren die Befestigung von Auflageelementen in einer Werkstückauflage einer Werkzeugmaschine, wobei Schneidroste an rohrförmigen Trägern befestigt sind. Diese Befestigung ist kompliziert beziehungsweise wenig fehlertolerant.

EP 0 213 235 A1 offenbart eine Werkstückauflage mit mehreren im Schneidrostraum rechtwinklig zu den Trägern angeordneten Schneidrostelementen, wobei das Schneidrostelement Ausnehmungen zum Übergreifen von Einkerbungen im Träger aufweist. Die Verbindung der Ausnehmungen mit den Einkerbungen übernimmt die Krafteinleitung und die seitliche Verschiebesicherung an einem Punkt.

Der Erfindung liegt nun die Aufgabe zugrunde, die Nachteile des Standes der Technik zu vermeiden und eine verbesserte Werkstückauflage für eine Werkzeugmaschine bzw. eine verbesserte Werkzeugmaschine bereitzustellen.

Diese Aufgabe wird gelöst durch eine Werkstückauflage gemäß Anspruch 1 beziehungsweise eine Werkzeugmaschine gemäß Anspruch 9.

Die erfindungsgemäße Werkstückauflage für eine Werkzeugmaschine, insbesondere eine Schneidmaschine, zur Abstützung eines zu bearbeitenden Werkstücks, umfasst zwei parallel verlaufenden Träger, die beabstandet voneinander angeordnet einen Schneidrostraum definieren, mehrere im Schneidrostraum rechtwinklig zu den Trägern angeordnete Schneidrostelemente, wobei jeder Träger einen sich zum Schneidrostraum hin erstreckenden Auflagebereich für die Schneidrostelemente aufweist, wobei wenigstens zwei Schneidrostelemente jeweils zwei den Trägern zugewandte Auflageflächen zur Auflage auf den Auflagebereichen der beiden Träger aufweisen, wobei die neben den Auflageflächen verbleibenden Unterseiten der wenigstens zwei Schneidrostelemente im Bereich der Auflagebereiche von den Auflageflächen zurückgesetzt sind, so dass die wenigstens zwei Schneidrostelemente nur mit den Auflageflächen aufliegen, und wobei die wenigstens zwei Schneidrostelemente jeweils zwei Fixierungselemente aufweisen, die von den Trägern jeweils mit einem Abstand kleiner als die Erstreckung der Auflagefläche von dem Träger beabstandet sind, so dass die Auflageflächen auf den Auflagebereichen fixiert sind, wobei der Auflagebereich durch ein Auflageprofil mit einem direkt am Träger angeordneten äußeren Auflagebereich gebildet ist, wobei das Auflageprofil einen weiter im Schneidrostraum angeordneten Innenschenkel aufweist und wobei die Auflageflächen nur auf dem äußeren Auflagebereich aufliegen und wobei die Fixierungselemente als, sich insbesondere ausgehend von ihrer Basis am Schneidrostelement konisch verjüngende, Zapfen ausgebildet sind, die in Zapfenaufnahmen des Auflageprofils eingreifen.

Die erfindungsgemäße Werkstückauflage schlägt eine im Schneidrostraum außen liegende Anbringung zumindest der äußeren Roste eines Schneidrost-Paketes vor. Dies hat den Vorteil, dass die Torsionsmomente verringert werden.

Der Abstand zwischen einem Auflagepunkt der Werkstückauflage wie zum Beispiel einer Rolle und einem Auflagepunkt des Schneidrostelementes wird so klein wie möglich gehalten. Dazu sind die äußeren Auflageleisten der Schneidrostelemente so optimiert, dass sie nur außen, das heißt an der äußeren Kante des Trägers, aufliegen. Die neben den Auflageflächen verbleibenden Unterseiten der Schneidrostelemente sind im Bereich der Auflagebereiche in der Höhe von den Auflageflächen zurückgesetzt. Dabei können die verbleibenden Unterseiten nach oben, das heißt in Richtung des Schneidrostraums, zurückgesetzt sein. Ebenso können die verbleibenden Unterseiten nach unten zurückgesetzt sein und dann dort zum Beispiel die Fixierungselemente bilden.

Es kann vorgesehen sein, dass das Auflageprofil als Profil oder Rohr und die Zapfenaufnahmen als Schlitze zur Aufnahme der Zapfen der Schneidrostelemente. ausgebildet sind. Dies erlaubt eine einfache Herstellung und gute Handhabung der Schneidrostelemente beim Einsetzen in das Auflageprofil.

Dadurch, dass die Auflageflächen nur auf dem äußeren Auflagebereich aufliegen, wird das auf den Träger aufgebracht Drehmoment beziehungsweise die Torsionskraft reduziert. Das Auflageprofil kann zum Beispiel ein U-förmiges Profil oder ein Rohr mit Ausnehmungen wie zum Beispiel Schlitzen sein.

Es kann vorgesehen sein, dass die Fixierungselemente in das Auflageprofil eingreifen. Damit haben die Fixierungselemente zwei Funktionen. Zum einen werden die Schneidrostelemente gegen Verschieben gesichert und zum anderen verhindern sie, dass die Träger sich voneinander entfernen, das heißt auseinanderbiegen. Die Fixierungselemente können wie eine Zunge oder Lasche ausgebildet sein und in das Profil oder Rohr eingreifen.

Es kann vorgesehen sein, dass die Fixierungselemente eine formschlüssige oder nahezu formschlüssige Verbindung mit einem inneren Bereich des Auflageprofils eingehen. Auf diese Weise werden die Orte oder Punkte der Krafteinleitung und der seitlichen Verschiebesicherung räumlich und funktional voneinander getrennt, was eine jeweilige Optimierung ermöglicht.

Es kann vorgesehen sein, dass das Auflageprofil als Profil oder Rohr mit Schlitzen zur Aufnahme der zwei Schneidrostelemente ausgebildet ist und dass das Profil oder Rohr an dem Träger befestigt ist, wobei zwischen dem Profil oder Rohr und dem Träger ein Versteifungsblech angeordnet ist. Das Versteifungsblech erhöht die Torsionssteifigkeit des Längsträgers.

Es kann ferner vorgesehen sein, dass an den Trägern in einem unteren Bereich Laufrollen vorgesehen sind. Durch das Verfahren des Schneidtisches kann die Flexibilität im Betrieb erhöht werden.

Es kann vorgesehen sein, dass die zwei Schneidrostelemente äußere Schneidrostelemente eines Schneidrost-Paketes sind und dass innere Schneidrostelemente des Schneidrost-Paketes nicht auf den Auflagebereichen aufliegen. Je Tisch können mehrere Schneidrost-Pakete vorgesehen sein, was einen modularen Aufbau und auch Austausch ermöglicht. Die inneren Roste liegen nicht auf, so dass dadurch keine zusätzlichen Momente oder Torsionskräfte auf den Träger aufgeprägt werden. Es ist ein Höhenunterschied der Auflagekanten der inneren und äußeren Schneidrostelemente vorgesehen.

Es kann vorgesehen sein, dass das Auflageprofil als Rohr mit Schlitzen zur Aufnahme der zwei äußeren Schneidrostelemente ausgebildet ist und dass die inneren Schneidrostelemente jeweils zwei direkt an den Trägern angeordnete Auflageflächen zur Auflage auf einer Oberseite des Rohrs aufweisen. Dadurch, dass zusätzlich zu den beiden äußeren Schneidrostelementen auch die inneren Schneidrostelemente aufliegen, entsteht eine bessere Gewichts-und Kraftverteilung. Zur Verringerung der eingebrachten Momente liegen die inneren Schneidrostelemente direkt an den Trägern auf, das heißt so weit wie möglich außen.

Die erfindungsgemäße Werkzeugmaschine, insbesondere eine Schneidmaschine, umfasst eine Werkstückauflage wie zuvor beschrieben zur Abstützung eines zu bearbeitenden Werkstücks. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische perspektivische Darstellung einer Werkzeugmaschine mit einem Schneidtisch;
- Figur 2: eine perspektivische Darstellung des Schneidtisches;
- Figur 3: eine perspektivische Detaildarstellung eines Schneidrost-Paketes;
- Figur 4: eine erste Schnittdarstellung des Schneidtisches;
- Figur 5: eine Detaildarstellung einer Sicherung des Schneidrost-Paketes; und
- Figur 6: eine zweite Schnittdarstellung des Schneidtisches.

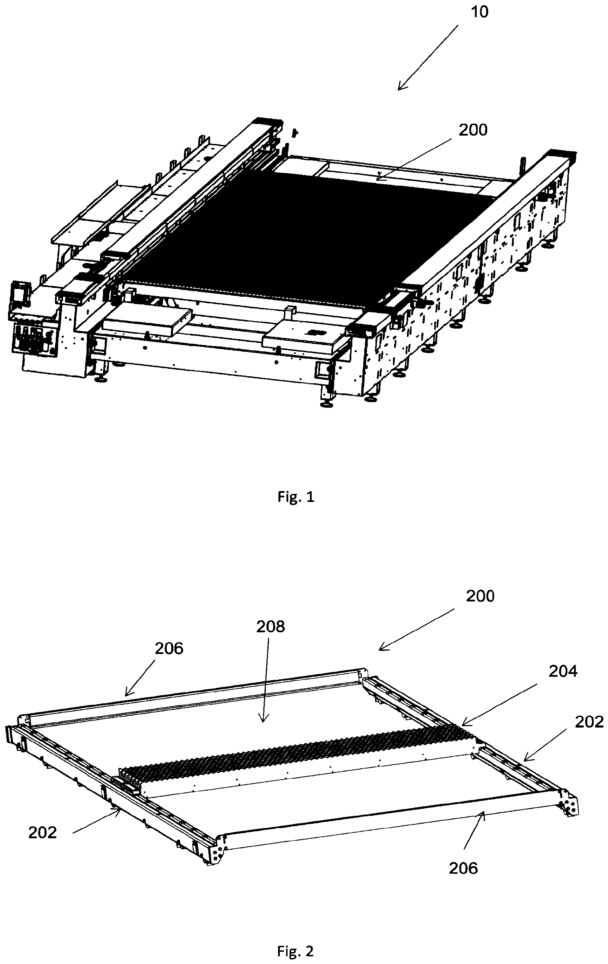

Figur 1 zeigt eine schematische perspektivische Darstellung einer Werkzeugmaschine 10 mit einer Werkstückauflage bzw. einem Schneidtisch 200 zur Aufnahme von hier nicht dargestellten Werkstücken, die durch die Werkzeugmaschine 10 bearbeitet, zum Beispiel geschnitten, werden. Die Werkzeugmaschine 10 ist beispielsweise eine Schneidmaschine, insbesondere eine Strahlschneidmaschine mit einem Laserstrahl, Wasserstrahl oder Plasmastrahl.

Figur 2 zeigt perspektivische Darstellung des Schneidtisches 200. Der Schneidtisch 200 umfasst zwei voneinander beabstandete und parallel verlaufende Längsträger 202. Zwischen den beiden Längsträgern 202 sind mehrere Schneidrost-Pakete 204, die zusammen einen Schneidrost bilden, vorgesehen. Die Schneidrost-Pakete 204 bestehen jeweils aus mehreren Schneidrostelementen. Die Schneidrostelemente sind an den Längsträgern 202 gelagert und verlaufen im Wesentlichen senkrecht zu diesen, also in einer Querrichtung. Zur Stabilisierung des Schreibtisches 200 kann dieser beispielsweise an einem oder an beiden Enden Querträger 206 aufweisen. Zwischen den Längsträgern 202 ist ein Schneidrostraum 208 definiert, in dem ein Werkstück, das auf den Schneidrost-Paketen 204 gelagert ist, bearbeitet wird.

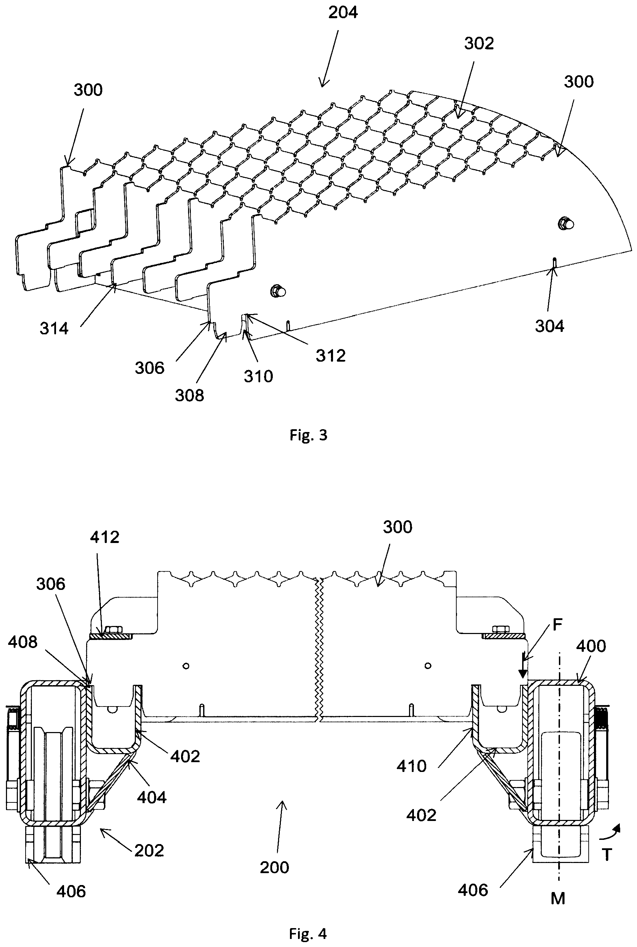

Figur 3 zeigt eine perspektivische Detaildarstellung des Schneidrost-Paketes 204. Das Schneidrost-Paket 204 hat zwei äußere Schneidrostelemente 300. Zwischen den beiden äußeren Schneidrostelementen 300 sind innere Schneidrostelemente 302 angeordnet. Die Schneidrostelemente 300 und 302 sind mittels mindestens einer Halterung 304 miteinander verbunden und in einem definierten Abstand zueinander gehalten.

Das äußere Schneidrostelement 300 hat eine am äußeren Ende angeordnete Auflagefläche 306 zur Auflage an einem Längsträger. Die Auflagefläche 306 ist relativ kurz bemessen, um eine möglichst punktuelle Auflage möglichst nah an dem Längsträger zu realisieren. Die Länge der Auflagefläche 306 kann dem 2 bis 10 fachen, vorzugsweise mit dem 3 bis 7 fachen, der Materialstärke des äußeren Schneidrostelementes 300 entsprechen.

An die Auflagefläche 306 schließt sich weiter innen, das heißt in Richtung des Schneidrostraumes, ein Fixierungselement in Form eines Zapfens oder einer Lasche 308 an. Diese Lasche 308 ragt ausgehend von der Auflagefläche 306 nach unten. Die Lasche 308 ist zum Beispiel mit 15° beidseitig angeschrägt. Weiter nach innen schließt sich eine Ausnehmung 310 an, welche gemeinsam mit der Lasche 308 zur seitlichen Fixierung des äußeren Schneidrostelementes 300 und damit des Schneidrost-Paketes 204 dient. Die Ausnehmung 310 erstreckt sich nach oben bis zu einer Endfläche 312.

Zwischen der Auflagefläche 306 und der Endfläche 312 besteht ein Höhenunterschied. Die Endfläche 312 liegt höher als die Auflagefläche 306, sodass bei Auflage des äußeren Schneidrostelementes 300 auf einem ebenmäßigen Profil lediglich die Auflagefläche 306 aufliegt und die Endfläche 312 frei bleibt. Der Höhenunterschied kann in einem Bereich zwischen einem Hundertstel und 5 Zehnteln, vorzugsweise einem Zehntel, der Materialdicke des äußeren Schneidrostelementes 300 liegen. Die hier beschriebenen Details des einen Endes des äußeren Schneidrostelementes 300 sind identisch zu dem anderen Ende des äußeren Schneidrostelementes 300.

Das innere Schneidrostelement 302 kann ebenfalls eine Auflagefläche 314 aufweisen. Die Auflagefläche 314 ist ähnlich ausgestaltet wie die Auflagefläche 306 des äußeren Schneidrostelementes 300. Insbesondere ist die Auflagefläche 314 an dem äußeren Ende des inneren Schneidrostelementes 302 angeordnet. An die Auflagefläche 314 schließt sich nach innen eine Ausnehmung oder Hinterschneidung an, so dass sichergestellt ist, dass nur die Auflagefläche 314 auf einem Träger aufliegt. Hier in diesem Beispiel ist die Höhe der Auflagefläche 314 höher als die der Auflagefläche 306. Damit kann zum Beispiel die Auflagefläche 314 auf einem Rohr des Längsträgers aufliegen, während die Auflagefläche 306 in einer Ausnehmung oder einem Schlitz des Längsträgers aufliegt. Die Höhe der Auflagefläche 314 kann alternativ der Höhe der Auflagefläche 306 entsprechen.

Figur 4 zeigt eine Schnittdarstellung des Schneidtisches 200 durch die Längsträger 202. Der Längsträger 202 umfasst ein außenliegendes Vierkantrohr 400 und ein kleineres, innenliegendes Vierkantrohr 402, welches zum Beispiel durch eine Schweißung an dem Vierkantrohr 401 befestigt ist. Ein Versteifungsblech 404 dient zur Abstützung des Vierkantrohres 402 an dem Vierkantrohr 400. In dem außen liegenden Vierkantrohr 400 sind Rollen 406 zum Verfahren des Schneidtisches 200 angeordnet.

In dem innenliegenden Vierkantrohr 402 sind als Schlitze ausgebildete Zapfenaufnahmen eingebracht, in welche die Zapfen bzw. Laschen 308 der äußeren Schneidrostelemente 300 eingreifen. Durch den Schlitz oder Schnitt wird von einem Außenschenkel des innenliegenden Vierkantrohrs 402 ein Auflagebereich 408 für die Auflagefläche 306 des äußeren Schneidrostelementes 300 gebildet. Der Schlitz oder Schnitt erstreckt sich zum Beispiel etwa bis zur Hälfte des innenliegenden Vierkantrohrs 402. Der Auflagebereich 408 ist am unteren Ende des Schlitzes oder Schnitts ausgebildet. Ein Innenschenkel 410 des innenliegenden Vierkantrohres 402 ragt in die Ausnehmung 310 des äußeren Schneidrostelementes 300. Die Höhe der Ausnehmung 310 und des Innenschenkels 410 sind derart bemessen, dass das äußere Schneidrostelement 300 nicht auf dem Innenschenkels 410 aufliegt, sondern von diesem beabstandet ist.

Die Kraft F, die von dem äußeren Schneidrostelement 300 in den Längsträger 202 eingeleitet wird, wird ausschließlich über die Auflageflächen 306 und die Auflagebereiche 408 übertragen. Da diese Kraftübertragung so nah wie möglich an einer Mittelsenkrechten M durch den Auflagepunkt der Rolle 406 liegt, ist das resultierende Torsionsmoment T so gering wie möglich.

Weiterhin dienen die Ausnehmung 310 und der Innenschenkel 410 als Verschiebesicherung zur Fixierung des Schneidrostelementes 300 zwischen den Längsträgern 202. Des Weiteren sind die beiden Längsträger 202 durch den Eingriff der Laschen 308 in die Vierkantrohre 402 gegen ein Auseinanderdrücken gesichert.

Mittels eines verschraubten Halteblechs 412 ist das Schneidrost-Paket in vertikaler Richtung gesichert.

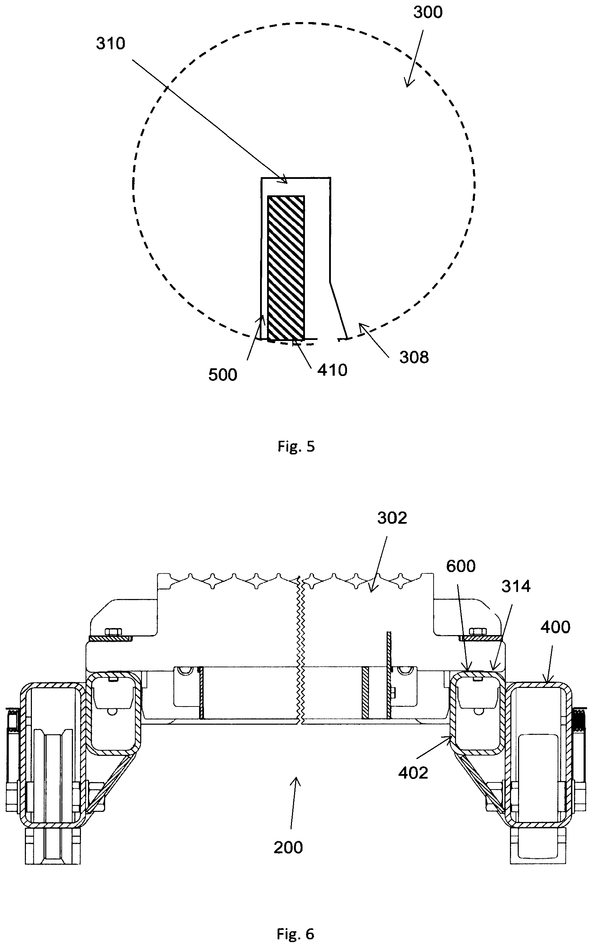

Figur 5 zeigt eine Detaildarstellung einer Sicherung des Schneidrost-Paketes bzw. des Schneidrostelementes 300. Wie deutlich zu sehen ist, befindet sich zwischen der Oberseite des Innenschenkels 410 und der Ausnehmung 310 ein Luftspalt, sodass das Schneidrostelement 300 nicht auf dem Innenschenkel 410 des Längsträgers 402 aufliegt.

Die Ausnehmung 310 dient zur Sicherung des Schneidrostelementes 300 beziehungsweise des Schneidrost-Paketes gegen Verschieben in Querrichtung. Durch die Sicherung wird garantiert, dass die Auflageflächen 306 stets auf den Auflagebereichen 408 aufliegen. Dies wird dadurch erreicht, dass Fixierungselemente, wie die Zapfen bzw. Laschen 308 und/oder eine Innenfläche 500 mit dem Innenschenkel 410 eine formschlüssige oder nahezu formschlüssige Verbindung eingehen.

In Figur 5 ist eine nahezu formschlüssige Verbindung, es besteht ein schmaler Luftspalt, zwischen dem Innenschenkel 410 und der Innenfläche 500 des Schneidrostelementes 300 dargestellt. Da diese Konfiguration auf beiden Seiten des Schneidrostelementes 300 vorhanden ist, ist das Schneidrostelement 300 gegen Verschieben gesichert. Bei einer formschlüssigen Verbindung würde die Innenfläche 500 an dem Innenschenkel 410 anliegen.

Figur 6 zeigt eine zweite Schnittdarstellung des Schneidtisches 200 und zwar derart versetzt zu der Darstellung von Figur 4, dass ein inneres Schneidrostelement 302 dargestellt ist. Da die Darstellung von Figur 6 weitgehend der Darstellung von Figur 4 entspricht, wird im Folgenden zur Vermeidung von Wiederholungen lediglich auf die Unterschiede Bezug genommen.

Die Schnittdarstellung zeigt den Längsträger 402 nicht geschnittenem Zustand. Der Längsträger 402 ist entsprechend geschlossen und hat eine obere Fläche 600. Auf dieser oberen Fläche 600 liegt das innere Schneidrostelement 302 mit einer Auflagefläche 314 auf. Die Auflagefläche 314 ist analog zu der Auflagefläche des äußeren Schneidrostelementes derart angeordnet und bemessen, dass sie möglichst weit außen, das heißt möglichst nahe an dem äußeren Längsträger 400, angeordnet ist. Dadurch werden auch diejenigen Momente, welche durch die inneren Schneidrostelemente 302 eingebracht werden, minimiert. Da die inneren Schneidrostelemente 302 zwischen den äußeren Schneidrostelementen 300 aufgehängt und von diesen getragen sind, erfolgt bereits ein Großteil der Krafteinleitung und damit der Erzeugung des Drehmoments oder der Torsionskraft durch die äußeren Schneidrostelemente.

Die hier vorgestellte Werkstückauflage 200 beziehungsweise Werkzeugmaschine 10 erlaubt eine Bearbeitung von Werkstücken bei einer minimierten Torsionskraft auf Träger der Werkstückauflage 200.

## Patentansprüche

1. Werkstückauflage für eine Werkzeugmaschine (10), insbesondere eine Schneidmaschine, zur Abstützung eines zu bearbeitenden Werkstücks, mit wenigstens zwei parallel verlaufenden Trägern (202), die beabstandet voneinander angeordnet einen Schneidrostraum (208) definieren,
mehreren im Schneidrostraum (208) rechtwinklig zu den Trägern (202) angeordneten Schneidrostelementen (300, 302),
wobei jeder Träger (202) einen sich zum Schneidrostraum (208) hin erstreckenden Auflagebereich (408) für die Schneidrostelemente (300, 302) aufweist,
wobei wenigstens zwei Schneidrostelemente (300) jeweils zwei den Trägern (202) zugewandte Auflageflächen (306) zur Auflage auf den Auflagebereichen (408) der beiden Träger (202) aufweisen, wobei die neben den Auflageflächen (306) verbleibenden Unterseiten der wenigstens zwei Schneidrostelemente (300) im Bereich der Auflagebereiche (408) von den Auflageflächen (306) zurückgesetzt sind, so dass die wenigstens zwei Schneidrostelemente (300) nur mit den Auflageflächen (306) aufliegen, und
wobei die wenigstens zwei Schneidrostelemente (300) jeweils zwei Fixierungselemente (308) aufweisen, die von den Trägern (202) jeweils mit einem Abstand kleiner als die Erstreckung der Auflagefläche (306) von dem Träger (202) beabstandet sind, so dass die Auflageflächen (306) auf den Auflagebereichen (408) fixiert sind,
**dadurch gekennzeichnet,**
**dass** der Auflagebereich (408) durch ein Auflageprofil (402) mit einem direkt am Träger (202) angeordneten äußeren Auflagebereich gebildet ist, wobei das Auflageprofil (402) einen weiter im Schneidrostraum (208) angeordneten Innenschenkel (410) aufweist und wobei die Auflageflächen (306) nur auf dem äußeren Auflagebereich aufliegen, und dass die Fixierungselemente (308) als, sich insbesondere ausgehend von ihrer Basis am Schneidrostelement (300, 302) konisch verjüngende, Zapfen ausgebildet sind, die in Zapfenaufnahmen des Auflageprofils (402) eingreifen.

2. Werkstückauflage nach Anspruch 1, **dadurch gekennzeichnet, dass** die Fixierungselemente (308) in das Auflageprofil (402) eingreifen.

3. Werkstückauflage nach Anspruch 1 oder 2, **dadurch gekennzeichnet, dass** die Fixierungselemente (308) eine formschlüssige oder nahezu formschlüssige Verbindung mit einem inneren Bereich (410) des Auflageprofils (402) eingehen.

4. Werkstückauflage nach einem der Ansprüche 1 bis 3, **dadurch gekennzeichnet, dass** das Auflageprofil (402) als Profil oder Rohr und die Zapfenaufnahmen als Schlitze zur Aufnahme der Zapfen der Schneidrostelemente (300) ausgebildet sind.

5. Werkstückauflage nach einem der Ansprüche 1 bis 3, **dadurch gekennzeichnet, dass** das Auflageprofil (402) als Profil oder Rohr mit Schlitzen zur Aufnahme wenigstens zwei Schneidrostelemente (300) ausgebildet ist und dass das Profil oder Rohr an dem Träger (202) befestigt ist, wobei zwischen dem Profil oder Rohr und dem Träger ein Versteifungsblech (404) angeordnet ist.

6. Werkstückauflage nach einem der vorhergehenden Ansprüche, **dadurch gekennzeichnet, dass** an den Trägern (202) in einem unteren Bereich Laufrollen (406) vorgesehen sind.

7. Werkstückauflage nach einem der vorhergehenden Ansprüche, **dadurch gekennzeichnet, dass** die zwei Schneidrostelemente (300) äußere Schneidrostelemente eines Schneidrost-Paketes (204) sind und dass innere Schneidrostelemente (302) des Schneidrost-Paketes (204) nicht auf den Auflagebereichen (408) aufliegen.

8. Werkstückauflage nach einem der Ansprüche 1 bis 7, **dadurch gekennzeichnet, dass** das Auflageprofil (402) als Rohr mit Schlitzen zur Aufnahme der zwei äußeren Schneidrostelemente (300) ausgebildet ist und dass die inneren Schneidrostelemente (302) jeweils zwei direkt an den Trägern (202) angeordnete Auflageflächen (314) zur Auflage auf einer Oberseite (600) des Rohrs aufweisen.

9. Werkzeugmaschine, insbesondere eine Schneidmaschine, mit einer Werkstückauflage (200) nach einem der Ansprüche 1 bis 8 zur Abstützung eines zu bearbeitenden Werkstücks.

## Claims

1. A workpiece support for a machine tool (10), in particular a cutting machine, for supporting a workpiece to be machined, having at least two parallel carriers (202) which, arranged so as to be spaced apart from one another, define a cutting grate space (208),
a plurality of cutting grate elements (300, 302) arranged in the cutting grate space (208) at right angles to the carriers (202),
wherein each carrier (202) has a support area (408) for the cutting grate elements (300, 302) which extends towards the cutting grate space (208),
wherein at least two cutting grate elements (300) each have two support surfaces (306) facing the carriers (202) for resting on the support areas (408) of the two carriers (202), wherein the undersides of the at least two cutting grate elements (300) remaining next to the support surfaces (306) are set back from the support surfaces (306) in the region of the support areas (408), so that the at least two cutting grate elements (300) rest only with the support surfaces (306), and
wherein the at least two cutting grate elements (300) each have two fixing elements (308), each of which is spaced apart from the carriers (202) by a distance smaller than the extent of the support surface (306) from the carrier (202), so that the support surfaces (306) are fixed on the support areas (408),
**characterised in that**
the support area (408) is formed by a support profile (402) with an outer support area arranged directly on the carrier (202), wherein the support profile (402) has an inner leg (410) arranged further in the cutting grate space (208) and wherein the support surfaces (306) rest only on the outer support area, and **in that** the fixing elements (308) are formed as pins which taper conically, in particular from their base on the cutting grate element (300, 302), and which engage with pin receptacles of the support profile (402).

2. The workpiece support according to claim 1, **characterised in that** the fixing elements (308) engage with the support profile (402).

3. The workpiece support according to claim 1 or 2, **characterised in that** the fixing elements (308) enter into a positive or almost positive connection with an inner region (410) of the support profile (402).

4. The workpiece support according to one of claims 1 to 3, **characterised in that** the support profile (402) is designed as a profile or tube and the pin receptacles are designed as slots for receiving the pins of the cutting grate elements (300).

5. The workpiece support according to one of claims 1 to 3, **characterised in that** the support profile (402) is designed as a profile or tube with slots for receiving at least two cutting grate elements (300) and **in that** the profile or tube is attached to the carrier (202), wherein a stiffening plate (404) is arranged between the profile or tube and the carrier.

6. The workpiece support according to one of the preceding claims, **characterised in that** rollers (406) are provided on the carriers (202) in a lower region.

7. The workpiece support according to one of the preceding claims, **characterised in that** the two cutting grate elements (300) are outer cutting grate elements of a cutting grate package (204) and **in that** inner cutting grate elements (302) of the cutting grate package (204) do not rest on the support areas (408).

8. The workpiece support according to one of claims 1 to 7, **characterised in that** the support profile (402) is designed as a tube with slots for receiving the two outer cutting grate elements (300) and **in that** the inner cutting grate elements (302) each have two support surfaces (314) arranged directly on the carriers (202) for resting on an upper side (600) of the tube.

9. A machine tool, in particular a cutting machine, having a workpiece support (200) according to one of claims 1 to 8 for supporting a workpiece to be machined.

## Revendications

1. Support de pièce à usiner pour une machine-outil (10), en particulier une machine à couper, pour soutenir une pièce à usiner à traiter, comprenant au moins deux éléments porteurs (202) s'étendant en parallèle, lesquels, espacés l'un de l'autre, définissent un espace de grille de coupe (208),
une pluralité d'éléments de grille de coupe (300, 302) agencés dans l'espace de grille de coupe (208) perpendiculairement aux éléments porteurs (202),
dans lequel chaque élément porteur (202) comporte une zone de support (408) s'étendant vers l'espace de grille de coupe (208) pour les éléments de grille de coupe (300, 302),
dans lequel au moins deux éléments de grille de coupe (300) comportent respectivement deux surfaces de support (306) tournées vers les éléments porteurs (202) pour le support sur les zones de support (408) des deux éléments porteurs (202), dans lequel les faces inférieures restant à côté des surfaces de support (306) des au moins deux éléments de grille de coupe (300) sont reculées dans la zone des zones de support (408) par rapport aux surfaces de support (306) de telle sorte que les au moins deux éléments de grille de coupe (300) reposent uniquement sur les surfaces de support (306) et
dans lequel les au moins deux éléments de grille de coupe (300) comportent respectivement deux éléments de fixation (308), lesquels sont respectivement espacés des éléments porteurs (202) d'une distance inférieure à l'extension de la surface de support (306) depuis l'élément porteur (202) de telle sorte que les surfaces de support (306) sont fixées aux zones de support (408),
**caractérisé en ce que**
la zone de support (408) est formée par un profilé de support (402) avec une zone de support extérieure disposée directement sur l'élément porteur (202), dans lequel le profilé de support (402) comporte une branche intérieure (410) disposée plus loin dans l'espace de grille de coupe (208) et dans lequel les surfaces de support (306) reposent uniquement sur la zone de support extérieure et que les éléments de fixation (308) sont conçus sous la forme des tenons se rétrécissant de manière conique, en particulier à partir de leur base sur l'élément de grille de coupe (300, 302), lesquels viennent en prise dans des logements de tenon du profilé de support (402).

2. Support de pièce à usiner selon la revendication 1, **caractérisé en ce que** les éléments de fixation (308) viennent en prise dans le profilé de support (402).

3. Support de pièce à usiner selon la revendication 1 ou 2, **caractérisé en ce que** les éléments de fixation (308) forment une liaison par complémentarité de forme ou presque par complémentarité de forme avec une zone (410) intérieure du profilé de support (402).

4. Support de pièce à usiner selon l'une quelconque des revendications 1 à 3, **caractérisé en ce que** le profilé de support (402) est conçu sous forme de profilé ou de tube et les logements de tourillon sont conçus sous forme de fentes pour recevoir les tourillons des éléments de grille de coupe (300).

5. Support de pièce à usiner selon l'une quelconque des revendications 1 à 3, **caractérisé en ce que** le profilé de support (402) est conçu sous la forme de profilé ou de tube comportant des fentes destinées au logement d'au moins deux éléments de grille de coupe (300) et que le profilé ou le tube est fixé sur l'élément porteur (202), dans lequel une tôle de raidissement (404) est disposée entre le profilé ou le tube et l'élément porteur.

6. Support de pièce à usiner selon l'une quelconque des revendications précédentes, **caractérisé en ce que** des roulements (406) sont situés sur les éléments porteurs (202) dans une zone inférieure.

7. Support de pièce à usiner selon l'une quelconque des revendications précédentes, **caractérisé en ce que** les deux éléments de grille de coupe (300) sont des éléments de grille de coupe extérieurs d'un paquet de grilles de coupe (204) et que les éléments de grille de coupe intérieurs (302) du paquet de grilles de coupe (204) ne reposent pas sur les zones de support (408).

8. Support de pièce à usiner selon l'une quelconque des revendications 1 à 7, **caractérisé en ce que** le profilé de support (402) est conçu sous la forme de tube comportant des fentes destinées au logement des deux éléments de grille de coupe (300) extérieurs et que les éléments de grille de coupe (302) intérieurs comportent respectivement deux surfaces de support (314) agencées directement sur les éléments porteurs (202) pour le support sur un côté supérieur (600) du tube.

9. Machine-outil, en particulier machine à couper, comprenant un support de pièce à usiner (200) selon l'une quelconque des revendications 1 à 8 pour supporter une pièce à usiner à traiter.
